# EUROPÄISCHE PATENTANMELDUNG

(11) **EP 4 593 267 A1**
(43) Veröffentlichungstag der Anmeldung: **30.07.2025**
(21) Anmeldenummer: 25153710.6
(22) Anmeldetag: 24.01.2025
(51) Int. Cl.: H02K 15/066, H02K 15/095

(54) **WICKELHILFSEINRICHTUNG UND VERFAHREN ZUR BEWICKLUNG EINES BAUTEILS MITTELS EINES DRAHTS SOWIE BEWICKLUNGSMASCHINE**

(30) Priorität: 29.01.2024 DE 102024102475
(71) Anmelder: Aumann Espelkamp GmbH, 32339 Espelkamp (DE)
(72) Erfinder: Hagedorn, Dipl.-Ing. Jürgen, 32312 Lübbecke (DE)
(74) Vertreter: Bittner, Thomas L.

(57) **Zusammenfassung**

Es ist eine Wickelhilfseinrichtung (1) zur Bewicklung der Wickelzähne (300) eines Rotors oder Stators einer Elektromaschine bereitgestellt. Die Wickelhilfseinrichtung (1) umfasst eine Aufnahme (2) für einen Stator oder Rotor mit innenliegenden Wickelzähnen (300), eine Führung (5), die an der Aufnahme (2) befestigt ist, mehrere Schlitten (51), die an der Führung (5) radialbeweglich gelagert sind, und mehrere an den Schlitten (51) gehaltene Wickelhaken (3). Die Wickelhaken (3) sind mit den Schlitten (51) zwischen einer radial inneren Wickelstellung und einer radial äußeren Entnahmestellung beweglich. Weiterhin sind eine Bewicklungsmaschine sowie ein Verfahren zur Bewicklung von Wickelzähnen (300) eines Rotors oder Stators einer Elektromaschine geschaffen.

## Beschreibung

Die Erfindung betrifft eine Wickelhilfseinrichtung und ein Verfahren zur Bewicklung eines Bauteils mittels eines Drahts sowie eine Bewicklungsmaschine.

### Hintergrund

Beim Bewickeln von innengenuteten Blechpaketen (Wickelzähnen), wie sie für Rotoren oder Statoren mit konzentrierter Wicklung eingesetzt werden, wird häufig die Nadelwickeltechnik eingesetzt. Dabei fährt der Nadelträger durch das Blechpaket und verlegt in der Bewegung den Draht in der jeweiligen Nut. Um die Kompaktheit von zu bewickelnden Bauteilen wie Statoren zu optimieren, kann es vorteilhaft sein, Verschaltdrähte bei einer Dreiecksreihenschaltung oder Sternreihenschaltung gegenüberliegend von einer Anschlussseite für U / V / W zu anzuordnen. Hierdurch werden weniger Drahtkreuzungen und generell Drahtanhäufungen gebildet. Die Nadelwickeltechnik wird im Zusammenhang der Herstellung von innengenuteten Statoren oder Rotoren zur Herstellung konzentrierter Wicklungen eingesetzt.

WO 2018 069 298 A1 beschreibt ein Verfahren zur Bewicklung der Wickelzähne eines Rotors oder Stators einer Elektromaschine mithilfe einer Wickelhilfseinrichtung und einer Nadelwickelvorrichtung. Dabei wird eine Wickelhilfseinrichtung auf die in Axialrichtung liegende Stirnseite des Rotors oder Stators aufgesetzt und mit dem Rotor oder Stator lösbar verbunden. Die Wickelzähne und die Wickelhilfseinrichtung werden anschließend mit einem Wickeldraht mit Nadelwickeltechnik bewickelt, wobei der Wickeldraht im Bereich der Wickelhilfseinrichtung umgelenkt wird, und wobei die Wickelhilfseinrichtung nach der vollständigen Bewicklung des Rotors oder Stators wieder entfernt wird. Die Wickelhilfseinrichtung umfasst eine Mehrzahl Drahtführungselemente, wobei jedem zu bewickelnden Wickelzahn ein Drahtführungselement zugeordnet ist und das Drahtführungselement einen Wickelzahnfortsetzungsabschnitt aufweist, der so ausgebildet ist, dass er den Wickelzahn in axialer Richtung fortsetzt. Jedes Drahtführungselement dieser Wickelhilfseinrichtung wird vor der Bewicklung mittels wenigstens eines Stiftes oder Bolzens am Rotor oder Stator befestigt, damit die beim Wickeln auftretenden Querkräfte nicht zu einer Verschiebung einzelner Drahtführungselemente in Umfangsrichtung führt, was zu einer Störung des Wickelvorgangs führen könnte. Durch die Verwendung einer Wickelhilfseinrichtung bleiben die Nuten zwischen den Wickelzähnen offen und jedes beliebige Wickelschema kann ohne Beschränkung durch die Wickelhilfseinrichtung umgesetzt werden. Allerdings ist das Befestigen der einzelnen Drahtführungselemente an den Wickelzähen vor der Bewicklung und das anschließende Entfernen der Drahtführungselemente mit einem erheblichen Aufwand an Zeit und manueller Arbeit verbunden.

Für einen beschleunigten Bewicklungsvorgang können auf den Stirnflächen der Wickelzähne Kunststoffendkappen eingesetzt werden, die zur Drahtverlegung im Wickelkopf dienen und die Spulenkörper vom Blechpaket isolieren. Dies ist beispielsweise in DE 10 2011 008 662 A1 beschrieben. Solche Kunststoffendkappen werden beim Wickeln der Blechpakete mit eingewickelt. Sie verbleiben also am Rotor oder Stator. Das Anbringen der Kunststoffendkappen benötigt relativ wenig Zeit und das aufwändige Entfernen der der Kunststoffendkappen kann entfallen. Allerdings ergeben sich durch die Verwendung von Endscheiben Nachteile durch unterschiedliche Drahtlängen verschiedener Phasen, die sich auf die Leistungsdichte verschiedener Phasen einer Elektromaschine negativ auswirken.

Statoren mit verteilter Wicklung werden üblicherweise nicht mit einer Nadelwickeltechnik direkt bewickelt. Stattdessen kommt ein Einziehverfahren zum Einsatz. Bei dem Einziehverfahren werden Wicklungen zunächst als sogenannte Feldspulen auf einer ersten Maschine erzeugt. Erst anschließend werden die Wicklungen von den Feldspulen abgenommen und als Ganzes durch eine Translationsbewegung in einen zu bewickelnden Rotor oder Stator auf einer anderen, zweiten Maschine axial hineingezogen. Das Einziehverfahren eignet sich nicht zum Bewickeln von Statoren oder Rotoren mit schräggenuteten innenliegenden Wickelzähnen. Motoren mit schräggenuteten Statoren oder Rotoren haben bessere Laufeigenschaften eine geringere Geräuschentwicklung.

### Zusammenfassung

Aufgabe der Erfindung ist es, eine Wickelhilfseinrichtung, ein Verfahren sowie eine Bewicklungsmaschine bereitzustellen, mit denen die Bewicklung eines Bauteils mittels eines Drahts auf effizientere und beschleunigte Weise bewerkstelligt werden kann. Insbesondere im Vergleich zum konventionellen Einziehverfahren ist ein verringerter Werkzeugaufwand und eine verringerte Anzahl an Arbeitsschritten gewünscht. Vorzugsweise soll eine Wickelhilfseinrichtung, ein Verfahren sowie eine Bewicklungsmaschine bereitgestellt werden, die sich für die Verarbeitung von schräggenuteten Statoren und/oder Rotoren mit innenliegenden Wickelzähnen eignet.

Die Aufgabe wird mittels der Wickelhilfseinrichtung und des Verfahrens zur Bewicklung eines Bauteils mittels eines Drahts sowie der Bewicklungsmaschine gemäß den unabhängigen Ansprüchen gelöst. Ausgestaltungen sind Gegenstand abhängiger Unteransprüche.

Demnach ist eine Wickelhilfseinrichtung zur Bewicklung der Wickelzähne eines Rotors oder Stators einer Elektromaschine vorgesehen. Die Wickelhilfseinrichtung umfasst eine Aufnahme für einen Stator oder Rotor mit innenliegenden Wickelzähne, eine Führung, die an der Aufnahme befestigt ist, mehrere Schlitten, die an der Führung radialbeweglich gelagert sind, und mehrere an den Schlitten gehaltene Wickelhaken. Insbesondere ist Aufnahme dazu ausgelegt und eingerichtet, mehrere Wickelzähne für eine Elektromaschine bezüglich der Führung positionsfest zu halten, wobei die mehreren Wickelzähne bevorzugt in Form eines Vollblechschnitts mit innenliegenden bereitgestellt sein können. Die Aufnahme kann eine Mittelachse oder Mittelpunktachse definieren, relativ zu welcher die Wickelzähne ausrichtbar sind. Die Führung kann in Bezug auf die Mittelachse vorzugweise symmetrisch ausgerichtet sein. Die Schlitten sind in einer jeweiligen Radialrichtung in Bezug auf die Mittelachse beweglich in der Führung gelagert. Die Wickelhaken sind mit den Schlitten zwischen einer radial inneren Wickelstellung und einer radial äußeren Entnahmestellung beweglich, vorzugsweise linearbeweglich. Insbesondere sind die Wickelhaken mit den Schlitten in radialer Richtung beweglich an der Führung gelagert. Gemäß einer bevorzugten Ausführung umfasst die Führung Radialnuten, in der die Schlitten geführt sind. Vorzugsweise sind die Schlitten in der in Umfangsrichtung und/oder axialer Richtung ortsfest gehalten, vorzugsweise durch die Führung, insbesondere durch eine Radialnut der Führung. Indem die Schlitten und die davon getragenen Wickelhaken dauerhaft an der Führung gelagert sind, kommt die Wickelhilfseinrichtung ohne aufwändige und fehleranfällige Verwendung zu lösender Teile aus. Es kann bevorzugt sein, dass jeder Schlitten in einer jeweiligen Radialnut geführt ist. Die Anzahl der Schlitten kann der Anzahl der Radialnuten entsprechen. Die Radialnuten können sich speichenartig ausgehend von der Mittelpunktachse in einer jeweiligen Radialrichtung erstrecken. Vorzugsweise ist die Wickelhilfseinrichtung derart ausgestaltet, dass sich die Wickelhaken in der Wickelstellung innerhalb eines durch die Aufnahme definierten Radialbereichs und in der Entnahmestellung außerhalb dieses Radialbereichs befinden. Es ist vorteilhaft, wenn die Schlitten dazu ausgelegt und eingerichtet sind, in der Arbeitsstellung ein Nutisolationspapier, insbesondere nach außen hin, abzustützen. Dadurch kann gewährleistet werden, dass die nach außen gezogene Wicklung das Nutisolationspapier (sogenanntes Kragenisolationspapier) durch ihren Wickelzug nicht einreißt oder auf andere Weise beschädigt.

Insbesondere sind die Wickelhaken in der Wickelstellung in Radialrichtung im Bereich der Aufnahme für die Wickelzähne angeordnet, wobei die Wickelzähne bevorzugt Teil eines Stators oder Rotors mit den innenliegenden Wickelzähnen sind. In der Wickelstellung kann mithilfe einer Wickelvorrichtung ein Draht zum Bewickeln von Wickelzähnen oder Wicklungszähnen um die Wickelhaken gelegt werden. Die Wickelhaken sind dazu ausgelegt und eingerichtet, in der Wickelstellung eine starre Aufnahme für den um die Wicklungszähne zu legenden Draht bereitzustellen. In der Wickelstellung kann jedem Zahn genau ein, wenigstens ein, beispielsweise genau zwei, oder mehr Wickelhaken an einer rechten Zahnflanke zugeordnet sein. Beispielsweise kann jedem Wickelzahn an seiner rechten Flanke ein Wickelhaken einer ersten Wickelhilfseinrichtung zugeordnet sein. Zusätzlich oder alternativ kann jedem Wickelzahn an seiner linken Flanke ein Wickelhaken einer zweiten Wickelvorrichtung zugeordnet sein. Es ist denkbar, dass in einer Wickelstellung einer rechten oder linken Zahnflanke zwei oder mehr Wickelhaken einer jeweiligen Wickelvorrichtung zugeordnet sind. Es kann bevorzugt sein, dass die Wickelhaken je eine Dicke in Umfangsrichtung aufweisen, die einer Zahndicke eines Wickelzahns, vorzugsweise identisch, entspricht, der dem jeweiligen Wickelhaken zugeordnet ist. Dies kann besonders für eine 1:1 Zuordnung Wickelhaken zu Wickelzähnen vorteilhaft sein. Insbesondere sind die Wickelhaken in der Entnahmestellung in der Radialrichtung relativ zu der Wickelstellung nach außen versetzt angeordnet. Die Wickelhaken sind dazu ausgelegt und eingerichtet, in der Entnahmestellung die Aufnahme und/oder die Wickelzähne freizugeben. In der Entnahmestellung können die mit dem Draht bewickelten Wickelzähne ungehindert durch die Wickelhaken aus der Wickelhilfseinrichtung entfernt werden. Die Wickelhaken sind in einem an der Führung fixierten Montagezustand zwischen der Wickelstellung und der Entnahmestellung beweglich. Die Wickelhilfseinrichtung ist für eine Verlagerung der Wickelhaken von der Wickelstellung zur Entnahmestellung in einem bewickelten Zustand der Wickelzähne ausgelegt und eingerichtet, wobei die Wickelzähne während der Verlagerung der Wickelhaken mittels der Führung an der Wickelhilfseinrichtung befestigt sind. Die Wickelzähne sind vorzugsweise Teil des Stators oder Rotors, der in der zentrischen Aufnahme der Vorrichtung gehalten wird, vorzugweise indem er durch Klemmen fixiert ist.

Gemäß einer Ausführungsform weisen die Schlitten erste Mitnehmer auf, die in einer ersten Kulisse aufgenommen sind. Die ersten Mitnehmer und die erste Kulisse sind derart aufeinander abgestimmt, dass eine rotatorische Bewegung der ersten Kulisse den ersten Mitnehmern eine radiale, insbesondere lineare, Bewegung aufprägt, sodass die Schlitten in Abhängigkeit von einer Relativstellung der Führung zur ersten Kulisse eine vorbestimmte Radialstellung einnimmt. Es kann bevorzugt sein, dass die erste Kulisse sich sowohl in der Radialrichtung als auch in der Umfangsrichtung erstreckt. Insbesondere kann ein (radial äußeres) Stirnende in Umfangsrichtung relativ zu einem (radial inneren) Fußende der, vorzugsweise bogenförmigen, ersten Kulisse versetzt angeordnet sein.

Bei manchen Ausführungsformen einer Wickelhilfseinrichtung sind die Wickelhaken zwischen der Wickelstellung und einer Freigabestellung beweglich, insbesondere schwenkbeweglich, vorzugsweise an dem Schlitten gelagert. Vorzugsweise sind in der Freigabestellung die Wickelhaken und/oder die Öffnungen der Wickelhaken in radialer Richtung nach innen ausgerichtet. Es kann bevorzugt sein, dass die Wickelhaken um einen virtuellen Drehpunkt schwenkbar an ihrem jeweiligen Schlitten angelenkt sind. Ein virtueller Drehpunkt kann in dem mit Draht belegbaren oder belegten Bereich des Wickelhaken angeordnet sein. Vorzugsweise ist der virtuelle Drehpunkt, um den ein Wickelhaken relativ zu seinem Schlitten schwenkbeweglich ist, derart angeordnet, dass dieser Wickelhaken in einem mit Draht bewickelten Zustand in Bezug diesen Drahtkollision frei zwischen der Wickelstellung und der Freigabestellung beweglich ist. Durch das verschwenken des Wickelhebels um einen virtuellen Drehpunkt kann eine Belastung und Beschädigung des Drahts durch den Wickelhaken vermieden werden. Vorzugsweise können die Öffnungen der Wickelhaken und/oder die Wickelhaken in der Wickelstellung in axialer Richtung ausgerichtet sein. Vorzugsweise können die Wickelhaken in der Wickelstellung eine Barriere für den Draht in der radialen Richtung nach innen und/oder außen definieren. Die Führung kann vorzugweise dergestalt ausgeführt und eingerichtet sein, dass die Wickelhaken zum Verbringen von der Wickelstellung in die Entnahmestellung die Freigabestellung durchlaufen müssen. Bei manchen Ausführungsformen (insbesondere solchen ohne schwenkbewegliche Wickelhaken) können die Wickelhaken in der Freigabestellung relativ zur Wickelstellung in der Axialrichtung versetzt angeordnet sein. Beispielsweise können die Wickelhaken in der Axialrichtung verfahren werden, um von der Wickelstellung in die Freigabestellung verbracht zu werden, bevor sie schließlich in der Radialrichtung verfahren werden, um zur Entnahmestellung zu gelangen. Die Wickelhaken definieren Öffnungen, die vorzugsweise in der Wickelstellung in Axialrichtung ausgerichtet sind. In der Wickelstellung erstrecken sich die Wickelhaken in der Axialrichtung. In der Freigabestellung können sich die Wickelhaken in manchen Ausführungen in der Radialrichtung erstrecken. In anderen Ausführungen können sich die Wickelhaken in der Freigabestellung in der Axialrichtung erstrecken. In der Entnahmestellung kann es bevorzugt sein, dass die Wickelhaken sich in der Radialrichtung erstrecken. Alternativ ist es denkbar, dass in der Freigabestellung die Wickelhaken sich in der Axialrichtung erstrecken. In der Freigabestellung und der Entnahmestellung können die Öffnungen der Wickelhaken in der radialen Richtung ausgerichtet sein.

Bei manchen Ausführungen weist die Wickelhilfseinrichtung ferner wenigstens eine Betätigungsvorrichtung auf, die dazu ausgelegt und eingerichtet ist, die Wickelhaken zwischen der Wickelstellung und der Freigabestellung zu verbringen. Die Betätigungsvorrichtung kann einen ersten, insbesondere aktiven, Betätigungszustand aufweisen, in dem die Betätigungsvorrichtung den Wickelhaken veranlasst, die Wickelstellung einzunehmen, und einen zweiten, insbesondere passiven, Betätigungszustand, in dem die Betätigungsvorrichtung den Wickelhaken veranlasst, die Freigabestellung einzunehmen. Es kann bevorzugt sein, dass die Betätigungsvorrichtung von dem Schlitten getragen ist. Die Betätigungsvorrichtung kann beispielsweise als ein Pneumatik- oder Hydraulikaktor, wie ein Pneumatik- oder Hydraulikzylinder, realisiert ist, der an einer Seite an dem Schlitten und an der anderen Seite an dem Wickelhaken festgelegt ist. Alternativ oder zusätzlich kann die Betätigungsvorrichtung einen Bowdenzug aufweisen, der einerseits an dem Schlitten und andererseits an dem Wickelhaken festgelegt ist. Alternativ kann ein Betätigungsschlitten durch einen Betätigungshebel mit einem ihm zugeordneten Wickelhaken verbunden sein.

Gemäß einer bevorzugten Ausführungsform weist die Betätigungsvorrichtung mit den Wickelhaken gekoppelte Betätigungsschlitten auf. Die Betätigungsschlitten sind, insbesondere in Radialrichtung, beweglich, vorzugsweise linearbeweglich, an der Führung gelagert. Es ist denkbar, dass die Betätigungsschlitten in den gleichen Radialnuten gelagert sind wie die Schlitten. Beispielsweise können der einem Wickelhaken zugeordnete Schlitten und der ihm zugeordnete Radialschlitten in derselben Radialnut gelagert sein.

Bei einer bevorzugten Ausführung der Wickelhilfseinrichtung weisen die Betätigungsschlitten je wenigstens einen zweiten Mitnehmer auf, der in einer zweiten Kulisse aufgenommen ist.

Die zweiten Mitnehmer und die zweite Kulisse sind derart aufeinander abgestimmt, dass eine rotatorische Bewegung der zweiten Kulisse dem zweiten Mitnehmern eine radiale, insbesondere lineare, Bewegung aufprägt, sodass die Betätigungsschlitten in Abhängigkeit von einer Relativstellung der Führung zur zweiten Kulisse eine vorbestimmte Radialstellung einnehmen.

Es kann bevorzugt sein, dass die zweite Kulisse sich sowohl in der Radialrichtung als auch in der Umfangsrichtung erstreckt. Insbesondere kann ein (radial äußeres) Stirnende in Umfangsrichtung relativ zu einem (radial inneren) Fußende der, vorzugsweise zumindest abschnittsweise bogenförmigen und/oder zumindest abschnittsweise geradlinigen, zweiten Kulisse versetzt angeordnet sein. Die zweite Kulisse kann einen radial inneren Bogenabschnitt und einen radial äußeren Linearabschnitt umfassen.

Bei manchen Ausführungsformen kann die Führung eine erste Kulisse und eine zweite Kulisse aufweisen. Die erste Kulisse und die zweite Kulisse können in der gleichen Richtung ausgerichtet sein (zum Beispiel beide im Uhrzeigersinn oder beide gegen den Uhrzeigersinn). Alternativ kann die erste Kulisse in Umfangsrichtung bezüglich der Mittelachse entgegengesetzt zur zweiten Kulisse ausgerichtet sein.

Bei Ausführungsformen mit erster und zweiter Kulisse kann es bevorzugt sein, dass die erste Kulisse und die zweite Kulisse radial zu einander versetzt, insbesondere in derselben Ebene, angeordnet sind. Vorzugsweise kann die zweite Kulisse die erste Kulisse in der Radialrichtung umgebend angeordnet sein.

Zusätzlich oder alternativ kann es vorgesehen sein, dass die Wickelhaken durch eine rotatorische Relativbewegung der ersten Kulisse bezüglich der zweiten Kulisse zwischen der Wickelstellung und einer Freigabestellung beweglich sind. Bei einer Relativbewegung der ersten Kulisse bezüglich der zweiten Kulisse kann die erste Kulisse und damit der Schlitten mit dem in der ersten Kulisse gehaltenen erste Mitnehmer in Radialrichtung ortsfest gehalten werden, während die zweite Kulisse um die Mittelachse rotiert und dabei den Betätigungsschlitten zwischen einer ersten und einer zweiten Stellung verlagert. Der Betätigungsschlitten kann beispielsweise mittels der zweiten Kulisse in der Führung in Radialrichtung bewegt werden, um den Wickelhaken, insbesondere mittels des Betätigungshebel, zwischen der Freigabestellung und der Wickelstellung zu verschwenken.

Alternativ oder zusätzlich kann vorgesehen sein, dass die Wickelhaken durch eine gemeinsame Bewegung der ersten Kulisse und der zweiten Kulisse zwischen der Freigabestellung und der Entnahmestellung beweglich sind. Bei einer gemeinsamen Bewegung der ersten Kulisse und der zweiten Kulisse kann der Radialabstand zwischen dem ersten und dem zweiten Mitnehmer im Wesentlichen konstant gehalten sein und/oder sowohl der Schlitten als auch der Betätigungsschlitten die gleiche radiale Bewegung erfahren. Für eine gemeinsame Bewegung können die erste und die zweite Kulisse drehfest aneinander gekuppelt sein.

Die Erfindung betrifft auch eine Bewicklungsmaschine die wenigstens eine Wickelhilfseinrichtung wie oben beschrieben, vorzugsweise genau zwei Wickelhilfseinrichtungen wie oben beschrieben, und wenigstens eine Wickelvorrichtung, vorzugsweise eine Nadelwickelvorrichtung, aufweist. Die Nadelwickelvorrichtung ist durch die Aufnahme der Wickelhilfseinrichtung oder Wickelhilfseinrichtungen beweglich, um zur Bewicklung der Wickelzähne eines Rotors oder Stators einer Elektromaschine einen Draht um die Wickelhaken zu führen. Vorzugsweise haben die Wickelhilfseinrichtungen eine gemeinsame Aufnahme für die Wickelzähne. Bei einer Bewicklungsmaschine mit einer ersten Wickelhilfseinrichtung und einer zweiten Wickelhilfseinrichtung kann es bevorzugt sein, dass die erste Wickelhilfseinrichtung an der linken Flanke der Wicklungszähne und die zweite Wickelhilfseinrichtung an der rechten Flanke der Wicklungszähne angeordnet ist. Vorzugsweise kann die Aufnahme dazu ausgelegt und eingerichtet relativ zu einer Wickelvorrichtung derart beweglich sein, dass in der Aufnahme fixierte Wicklungszähne relativ zu der Führung unabhängig von einer, vorzugsweise rotatorischen und/oder translatorischen, Relativbewegung der Aufnahme in Bezug auf die Wickelvorrichtung ortsfest gehalten ist. Die Wickelvorrichtung kann in Bezug auf die Wickelhilfseinrichtung sowie gegebenenfalls in deren Aufnahme, insbesondere mit einem Stator oder Rotor, gehaltenen Wicklungszähnen in Axialrichtung linearbeweglich sein, um einen Draht entlang eines Wicklungszahns zu verlegen. Vorzugsweise kann die Wickelhilfseinrichtung, gegebenenfalls mit einem in der Aufnahme gehaltenen Stator oder Rotor mit Wicklungszähnen in Axialrichtung linearbeweglich sein, um einen Draht entlang eines Wicklungszahns zu verlegen, ohne dass dabei eine Wickelnadel, eine Wickeldüse, und/oder ein Drahtführer in den Zwischenraum der Wickelzähne eintauchen muss. Alternativ kann die Wickelhilfseinrichtung, gegebenenfalls mit einem in der Aufnahme gehaltenen Stator oder Rotor mit seinen Wicklungszähnen in Axialrichtung linearbeweglich sein, um einen Draht entlang eines Wicklungszahns zu verlegen, wobei die Wickelnadel, Wickeldüse, und/oder der Drahtführer in den Zwischenraum der Wickelzähne eintaucht. Die Wickelvorrichtung kann in Bezug auf die Wickelhilfseinrichtung sowie gegebenenfalls in deren Aufnahme gehaltenen Wicklungszähnen um eine Mittelachse drehbeweglich sein, um einen Draht um eine Zahnflanke eines Wicklungszahns zu verlegen. Alternativ oder zusätzlich kann die Wickelvorrichtung in Bezug auf die Wickelhilfseinrichtung sowie gegebenenfalls in deren Aufnahme gehaltenen Wicklungszähnen um eine Mittelachse drehbeweglich sein, um einen Draht von einer ersten Zahnlücke zwischen einem ersten Paar benachbarter Wicklungszähne zu einem zweiten Paar benachbarter Wicklungszähne zu verlegen. Insbesondere kann die Wickelvorrichtung in Bezug auf die Wickelhilfseinrichtung, gegebenenfalls mit einem in deren Aufnahme gehaltenen Stator oder Rotor, relativ zu einer Mittelachse beweglich, insbesondere drehbeweglich, sein, um die Länge der Anschlussdrähte des Stators oder Rotors einzustellen. Alternativ oder zusätzlich kann die Wickelvorrichtung in Bezug auf die Wickelhilfseinrichtung, gegebenenfalls mit einem in deren Aufnahme gehaltenen Stator oder Rotor mit innenliegenden Wicklungszähnen, um eine Mittelachse drehbeweglich sein, um ein vorbestimmtes Verschaltschema oder mehrere, insbesondere vorbestimmte, Verschaltschematas des Stators oder Rotors zu erzeugen.

Optional kann eine Bewicklungsmaschine, die zwei Wickelhilfseinrichtungen aufweist, ferner wenigstens ein Distanzstück aufweisen, das dazu ausgelegt und eingerichtet ist, einen Axialabstand zwischen den zwei Wickelhilfseinrichtungen festzulegen. Vorzugsweise ist die Wickelhilfseinrichtung mithilfe verschiedener Distanzstücke unterschiedlicher Längen einfach und kostengünstig entsprechend unterschiedlicher Axialabstände einstellbar. Eine solche Bewicklungsmaschine kann auf vorteilhafte Weise einfach und kostengünstig zur Fertigung unterschiedlich eines Stator- oder Rotorlängen umgerüstet werden. Vorteilhaft ist, dass die Wickelhilfseinrichtung wahlweise stationär in der Wickelmaschine oder auf einem nicht stationären Werkstückträger angeordnet sein kann.

Die Erfindung betrifft außerdem ein Verfahren zur Bewicklung der Wickelzähne eines Rotors oder Stators einer Elektromaschine mit den folgenden Schritten: Bei dem Verfahren ist ein Schritt des Bereitstellens einer Aufnahme für einen Stator oder Rotor mit innenliegenden Wickelzähnen vorgesehen. Ferner umfasst das Verfahren das Einsetzen des Stators oder Rotors mit den Wickelzähnen in die Aufnahme. Insbesondere kann ein schräggenuteter Stator oder Rotor eingesetzt werden. Das Verfahren umfasst weiterhin das Bereitstellen von Wickelhaken. Die bereitgestellten Wickelhaken werden derart bereitgestellt, dass sie an der Aufnahme mit einer Führung beweglich gelagert sind. Die Bereitstellung der Wickelhaken betrifft eine ersten Gruppe Wickelhaken, angeordnet in einer radial inneren Wickelstellung und an einem ersten axialen Ende der Aufnahme, sowie eine zweite Gruppe Wickelhaken in einer radial inneren Wickelstellung und an einem zweiten axialen Ende der Aufnahme. Bei dem Verfahren wird ferner eine Wickelvorrichtung, insbesondere eine Nadelwickelvorrichtung, bereitgestellt. Bei dem erfindungsgemäßen Verfahren zur Bewicklung der Wickelzähne wird ein Draht, insbesondere mittels der Wickelvorrichtung, vorzugsweise der Nadelwickelvorrichtung, um die erste und um die zweite Gruppe Wickelzähne geführt, um die in der Aufnahme gehaltenen Wickelzähne eines, insbesondere schräggenuteten, Rotors oder Stators zu bewickeln. Insbesondere nachdem der Draht mehrfach um die erste und die zweite Gruppe der Wickelzähne herumgeführt wurde, vorzugsweise nach vollständiger Bewicklung des Stators oder Rotors mit innenliegenden Wickelzähnen, umfasst das Verfahren einen Schritt des Bewegens der ersten und der zweiten Gruppe Wickelhaken mittels der Führung in eine radial äußere Entnahmestellung an der Aufnahme. Sodann erfolgt bei dem Verfahren, insbesondere zum Abschluss des Verfahrens, eine Entnahme des bewickelten Stators oder Rotors mit innenliegenden Wickelzähnen aus der Aufnahme.

Bei einer bevorzugten Ausgestaltung des erfindungsgemäßen Verfahrens werden die Wickelhaken von der Wickelstellung in eine Freigabestellung verbracht, insbesondere verschwenkt, bevor sie in die Entnahmestellung bewegt werden.

Es kann bevorzugt sein, dass das erfindungsgemäße Verfahren unter Verwendung der erfindungsgemäßen Wickelhilfseinrichtung und/oder Bewicklungsmaschine durchgeführt wird. Die erfindungsgemäße Wickelhilfseinrichtung oder die Bewicklungsmaschine können zur Durchführung des erfindungsgemäßen Verfahrens ausgelegt und eingerichtet sein.

Die vorliegende Offenbarung beschreibt insbesondere ein Verfahren zur direkten Bewicklung der Wickelzähne des innengenuteten Rotors oder Stators einer Elektromaschine, vorzugsweise mit einer verteilten Wicklung. Bei dem Verfahren kann eine Wickelhilfseinrichtung auf die in Axialrichtung liegende Stirnseite des innengenuteten Rotors oder Stators aufgesetzt werden. Die Wickelhilfseinrichtung kann mit dem innengenuteten Rotor oder Stator lösbar verbunden werden. Bei dem Verfahren können die Wickelzähne und die Wickelhilfseinrichtung mit einem Wickeldraht, bevorzugt mit Nadelwickeltechnik, bewickelt werden. Vorzugsweise wird der Wickeldraht im Bereich der Wickelhilfseinrichtung umgelenkt wird. Es kann besonders bevorzugt sein, dass die Wickelhilfseinrichtung nach dem vollständigen Bewickeln des innengenuteten Rotors oder Stators nicht entfernt wird, d.h. nicht demontiert und/oder abgenommen wird, sondern nur aus der Wicklung heraus bewegt wird. Die Wickelhilfseinrichtung umfasst vorzugsweise eine Mehrzahl Drahtführungselementen (Wickelhaken). Insbesondere ist jedem zu bewickelnden Wickelzahn mindestens ein Drahtführungselement zugeordnet.

### Beschreibung von Ausführungsbeispielen

Im Folgenden werden weitere Ausführungsbeispiele unter Bezugnahme auf Figuren näher erläutert. Hierbei zeigen:
- Fig. 1A: eine Bewicklungsmaschine mit einer Wickelhilfseinrichtung und einer Nadelvorrichtung in einer oberen Stellung;
- Fig. 1B: die Bewicklungsmaschine gemäß Fig. 2 mit der Nadelvorrichtung in einer Mittelstellung (Nutfahrt);
- Fig. 1C: die Bewicklungsmaschine gemäß Fig. 2 mit der Nadelvorrichtung in einer unteren Stellungstellung;
- Fig. 2: eine schematische Darstellung einer verteilten Wicklung;
- Fig. 3: eine Ansicht von Wickelzähnen eines Rotors oder Stators einer Elektromaschine mit einer verteilten Wicklung;
- Fig. 4A: eine Seitenansicht einer Bewicklungsmaschine;
- Fig. 4B: eine Draufsicht auf die Bewicklungsmaschine nach Fig. 4A;
- Fig. 5A: eine Schnittdarstellung einer Bewicklungsmaschine in einer Wickelstellung;
- Fig. 5B: eine Teilschnitt der Bewicklungsmaschine nach Fig. 5A in der Wickelstellung;
- Fig. 5C: eine vereinfachte perspektivische Teilansicht der Wickelhilfseinrichtung der Bewicklungsmaschine nach Fig. 5A in der Wickelstellung;
- Fig. 5D: eine teilweise Draufsicht der Bewicklungsmaschine nach Fig. 5A in der Wickelstellung;
- Fig. 6A: eine Schnittdarstellung einer Bewicklungsmaschine in einer Freigabestellung;
- Fig. 6B: eine Teilschnitt der Bewicklungsmaschine nach Fig. 6A in der Freigabestellung;
- Fig. 6C: eine vereinfachte perspektivische Teilansicht der Wickelhilfseinrichtung der Bewicklungsmaschine nach Fig. 6A in der Freigabestellung;
- Fig. 6D: eine teilweise Draufsicht der Bewicklungsmaschine nach Fig. 6A in der Freigabestellung;
- Fig. 6E: eine vereinfachte Seitenansicht der Wickelhilfseinrichtung der Bewicklungsmaschine nach Fig. 6A in der Freigabestellung;
- Fig. 6F: eine Schnittansicht der Bewicklungsmaschine nach Fig. 6A in der Freigabestellung;
- Fig. 7A: eine Schnittdarstellung einer Bewicklungsmaschine in einer Entnahmestellung;
- Fig. 7B: eine Teilschnitt der Bewicklungsmaschine nach Fig. 7A in der Entnahmestellung;
- Fig. 7C: eine vereinfachte perspektivische Teilansicht der Wickelhilfseinrichtung der Bewicklungsmaschine nach Fig. 7A in der Entnahmestellung;
- Fig. 7D: eine teilweise Draufsicht der Bewicklungsmaschine nach Fig. 7A in der Entnahmestellung;
- Fig. 8: eine vereinfachte perspektivische Teilansicht der Wickelhilfseinrichtung in der Wickelstellung;
- Fig. 9: eine vereinfachte perspektivische Teilansicht der Wickelhilfseinrichtung nach Fig. 8 in der Freigabestellung;
- Fig. 10: eine vereinfachte perspektivische Teilansicht der Wickelhilfseinrichtung nach Fig. 8 in der Entnahmestellung;
- Fig. 11: eine Draufsicht auf eine erste Kulisse und eine zweite Kulisse einer Wickelhilfseinrichtung; und
- Fig. 12: eine Draufsicht auf die Führung einer Wickelhilfseinrichtung gemäß Fig. 11.

In der nachfolgenden Beschreibung bevorzugter Ausführungen der Erfindung werden für die gleichen oder ähnliche Komponenten die gleichen oder ähnliche Bezugszeichen verwendet.

Eine erfindungsgemäße Wickelhilfseinrichtung wird im Allgemeinen durch das Bezugszeichen 1 gekennzeichnet. Die Wickelhilfseinrichtung 1 umfasst eine Aufnahme 2 für einen Stators oder Rotors mit innenliegenden Wickelzähnen 300, sowie eine an der Aufnahme 2 befestigte Führung 5. Die Wickel Hilfseinrichtung 1 umfasst ferner mehrere Schlitten 51, die an der Führung 5 in der Radialrichtung R beweglich gelagert sind. Vorzugsweise sind die Schlitten 51 an der Führung 5 in einer jeweiligen Radialrichtung R linearbeweglich gelagert.

Die Wickelhilfseinrichtung 1 umfasst ferner mehrere an den Schlitten 51 gehaltene Wickelhaken 3. Vorzugsweise, wie bei der dargestellten bevorzugten Ausführung, ist in jedem der Schlitten 51 ein Wickelhaken 3 gehalten. Gemäß einer nicht näher dargestellten Ausführung können in die Wickelhaken 3 starr an dem Schlitten gehalten sein. Bei den nachfolgend im Detail beschriebenen Ausführungsformen sind die Wickelhaken 3 schwenkbeweglich an ihren Schlitten 51 gelagert. Alternativ kann es denkbar sein, dass die Schlitten gemeinsam mit ihren starren Wickelhaken schwenkbeweglich sind oder dass die Schlitten mit daran befestigten Wickelhaken nicht nur, wie abgebildet, in Radialrichtung R sondern beispielsweise zur Verlagerung zwischen einer Wickelstellung und einer Freigabestellung in Axialrichtung A beweglich an der Führung 5 gehalten sind.

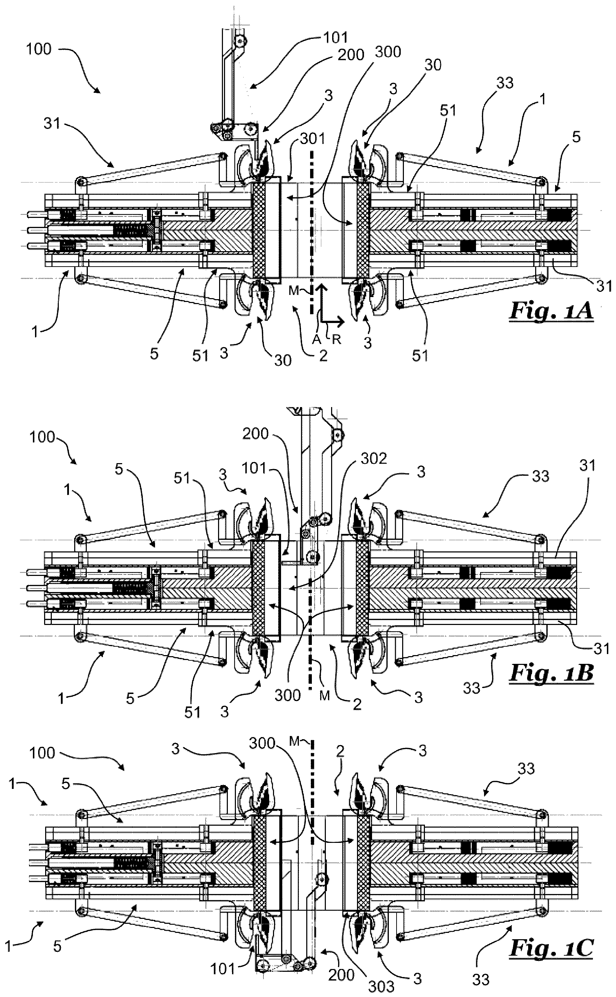

Die Figuren 1A bis 1C zeigen den Vorgang des Bewickelns der Wickelzähne 300 des Rotors oder Stators einer Elektromaschine in einer Bewicklungsmaschine 100, die zwei Wickelhilfseinrichtungen 1 aufweist. Die erste Wickelhilfseinrichtung 1 ist an der rechten Zahnflanke 301 der Wickelzähne 300 angeordnet und die zweite Wickelhilfseinrichtung 1 an der linken Zahnflanke 303 der Wickelzähne 300. Die Wickelzähne 300 sind zum Bewickeln in einer gemeinsame Aufnahme 2 der Wickelhilfseinrichtungen 1 angeordnet. Jede Wickelhilfseinrichtung 100 hat eine kranzförmig angeordnete Gruppe von Wickelhaken 3. Die Gruppe Wickelhaken 3 der ersten Wickelhilfseinrichtung 1 ist in der Axialrichtung A nach rechts (im Bild: oben) offen ausgerichtet. Die zweite Gruppe Wickelhaken 3 der zweiten Wickelhilfseinrichtung 1 ist in der Axialrichtung A nach links (im Bild: unten) offen ausgerichtet. Die Aufnahme 2 ist im Wesentlichen hohlzylindrisch. Die Aufnahme 2 erstreckt sich in der Axialrichtung A zwischen der ersten und der zweiten Gruppe Wickelhaken 3.

Zum Bewickeln der Wickelzähne 300 ist eine in der abgebildeten Ausführung als Nadelwickelvorrichtung 200 realisierte Wickelvorrichtung vorgesehen. Die Nadelwickelvorrichtung 200 wird von der rechten Zahnflanke 301 (wie in Figur 1A dargestellt) zur linken Zahnflanke 303 (wie in Figur 1C dargestellt) bewegt, um Zahnlücken 302 zwischen benachbarten Wickelzähnen 300 mit dem Draht 101 zu belegen. Figur 1A zeigt die Nadelwickelvorrichtung 200 in einer oberen Endlage, in der der Draht 1 in einen Wickelhaken 3 einer ersten Gruppe Wickelhaken an der rechten Zahnflanke 301 eingelegt wird. In dieser Stellung wird für Statoren oder Rotoren mit verteilter Wicklung der sogenannte Wicklungsschritt auf der Oberseite erzeugt. Alternativ oder zusätzlich kann in dieser Stellung werden eine Start- und/oder eine Enddrahtlängen erzeugt werden (Anschlussdrähte des Stators oder Rotors). Figur 1B zeigt die Nadelwickelvorrichtung in einer Zwischenlage, während der Draht 101 durch eine Zahnlücke 302 gezogen wird (Nutfahrt). Figur 1C zeigt die Nadelwickelvorrichtung in einer unteren Endlage, in der der Draht 1 in einen Wickelhaken 3 einer zweiten Gruppe Wickelhaken an der linken Zahnflanke 303 eingelegt wird. In dieser Stellung wird für Statoren oder Rotoren mit verteilter Wicklung der sogenannte Wicklungsschritt auf der Unterseite erzeugt.

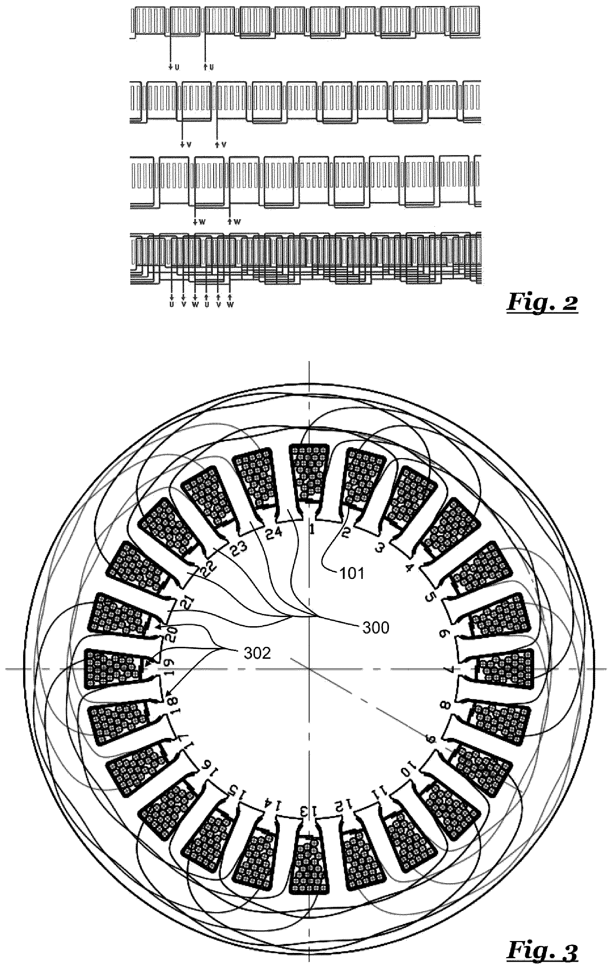

Figur 3 zeigt eine Ansicht eines bewickelten Rotors oder Stators mit einer Vielzahl von Wickelzähnen 300 (hier: 24) und zwischen paarweise benachbarten Wickelzähnen 300 angeordneten Zahnlücken 302, in denen der Draht 101 aufgenommen ist. Der Draht 101 umfasst drei Abschnitte (genauer: Phasen) U, V, W, die in einer verteilten Wicklung in dem Rotor oder Stator angeordnet sind. Fig. 2 zeigt eine schematische Darstellung einer solchen verteilten Wicklung, wie sie mit den hier beschriebenen Wickelhilfseinrichtungen 1 besonders effizient herstellbar ist.

Zum Verlagern der Nadelwickelvorrichtung 200 zwischen einer Zahnlücke 302 und einer anderen Zahnlücke kann eine relative Verdrehung der Nadelwickelvorrichtung 200 in Bezug auf die Wickelhilfseinrichtung 1 durchgeführt werden. Beispielsweise wird die Wickelhilfseinrichtung 1 bezüglich der Mittelachse M rotationsstarr gehalten und die Nadelwickelvorrichtung 200 um die Mittelachse M gedreht. Vorzugsweise kann die Nadelwickelvorrichtung 200 drehstarr sein und die Wickelhilfseinrichtungen 1 relativ zur Mittelachse M drehbeweglich und zur Betätigung mit einer Wickelspindel verbunden sein.

Während des Bewickelns der Wickelzähne 300 sind die Wickelhaken 3 in einer Wickelstellung in dem von der Aufnahme 2 aufgespannten Radialbereich angeordnet. In den Figuren 1A bis 1C, 5A bis 5D und 8 sind die Wickelhaken 3 in der Wickelstellung angeordnet. Die Wickelzähne 300 können mittels der Wickelhaken 3 und/oder der Schlitten 51 in der Axialrichtung A in der Aufnahme 2 fixiert sein.

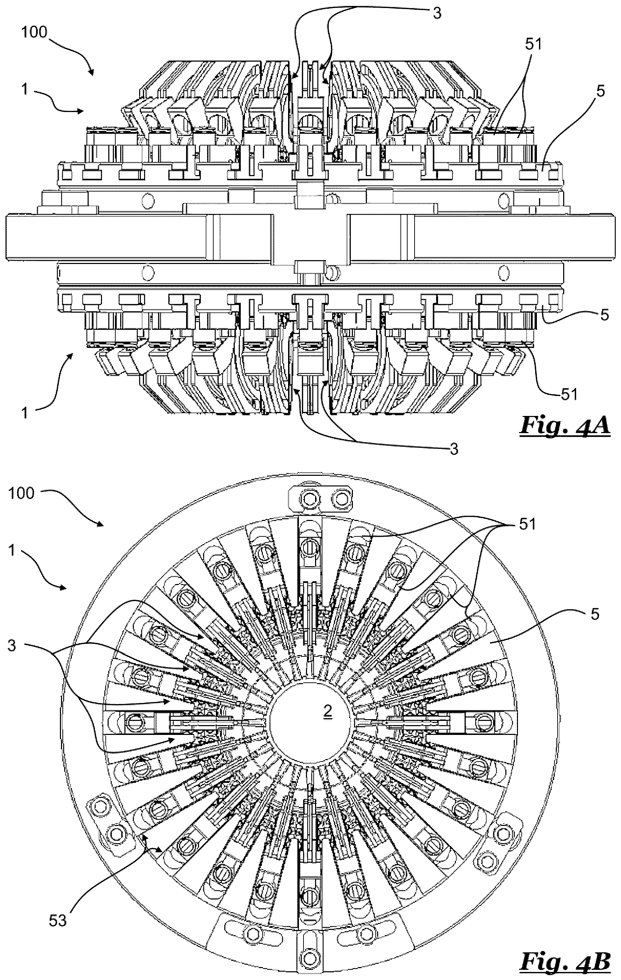

Die Figuren 4A und 4B zeigen eine Seitenansicht der Bewicklungsmaschine 100 beziehungsweise Draufsicht auf die Bewicklungsmaschine 100. Bei den Figuren 4A und 4B ist Wickelvorrichtung zur Vereinfachung der Darstellung nicht abgebildet.

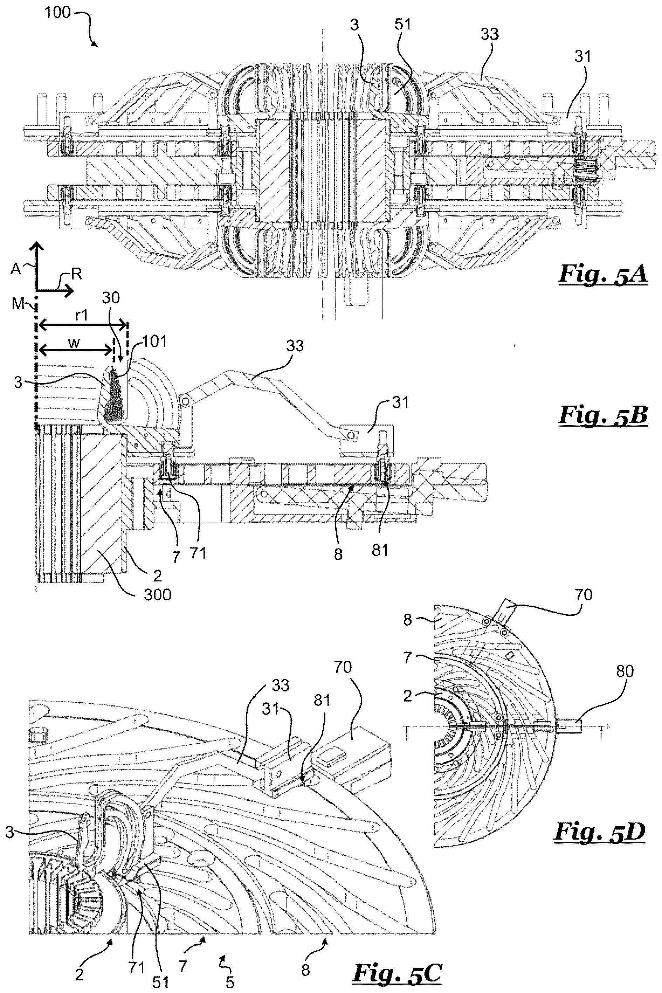

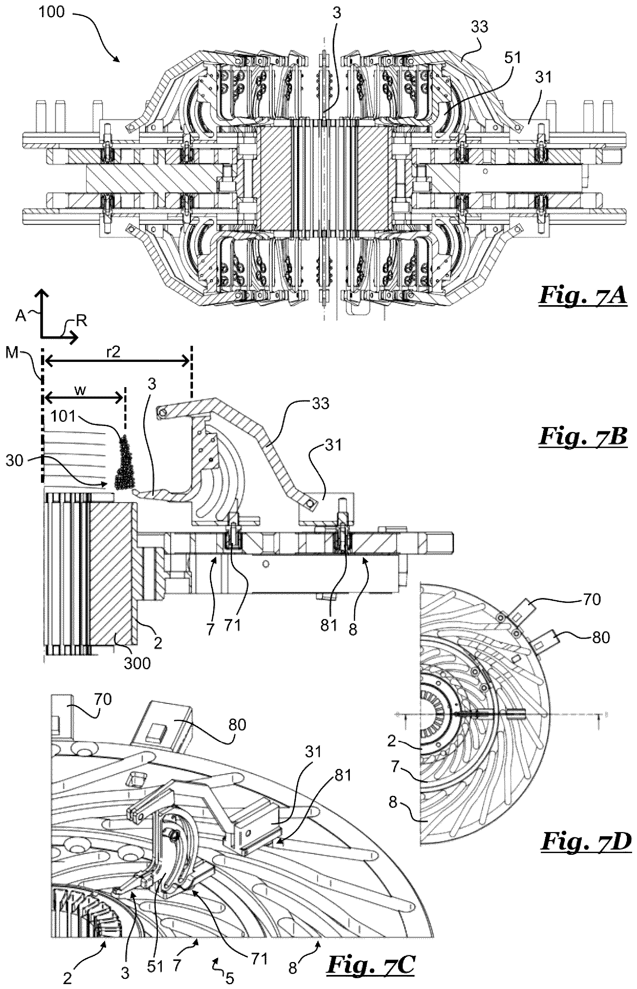

Die Figuren 5A bis 5D zeigen unterschiedliche Ansichten der Bewicklungsmaschine 100 in der Wickelstellung. Die Figuren 7A bis 7D zeigen die Bewicklungsmaschine 100 in einer Entnahmestellung. Die in den Figuren 5A, 6A oder 7A abgebildete Bewicklungsmaschinen 100 ist ohne ein Distanzstück ausgeführt. Optional können zwischen den in der Axialrichtung A gegenüberliegenden Wickelhilfseinrichtungen 1 können unterschiedliche Distanzstücke für verschiedene Stator- oder Rotoren unterschiedlicher Breite in der Axialrichtung vorgesehen werden.

In der Entnahmestellung sind die Wickelzähne 300 in der Axialrichtung A von den Wickelhilfseinrichtungen 1 freigegeben, sodass der Stator oder Rotor einschließlich den mit dem Draht 101 bewickelten Wickelzähnen 300 aus der Aufnahme 2 in der Axialrichtung A entnehmbar ist. In der Entnahmestellung sind die Wickelhaken 3 in Radialrichtung R nach außen versetzt angeordnet. In der Entnahmestellung befinden sich die Wickelhaken 3 radial außerhalb des von der Aufnahme 2 aufgespannten Radialbereichs. Um die Wickelhaken 3 aus der Wickelstellung in die Entnahmestellung zu verlagern, werden sie gemeinsam mit den Schlitten 51, an denen sie gehalten sind, in der Radialrichtung R nach außen verschoben.

Bei der in den Figuren (zum Beispiel Figur 4B) abgebildeten bevorzugten Ausführungsform hat die Führung 5 Radialnuten 53, in denen jeweils ein Schlitten 51 geführt ist. Die Radialnuten 53 erstrecken sich ausgehend von der Mittelachse M speichenartig radial nach außen. Die Radialnuten 53 sind bei der abgebildeten bevorzugten Ausführungsform geradlinig. Zum Verlagern der Haken 3 zwischen der Wickelstellung und der Entnahmestellung sind die Haken 3 auf den Schlitten 51 in den Radialnuten 53 radial beweglich gelagert. Indem die Haken 3 zwischen der Wickelstellung und der Entnahmestellung beweglich an der Führung 5 gehalten sind, brauchen anders als bislang die Wickelhaken nicht einzeln demontiert werden, um den Stator oder Rotor im Anschluss an eine Bewicklung aus der Wickelmaschine 100 entnehmen zu können.

Der Radialbereich, in dem die Wicklung erfolgt, entspricht näherungsweise dem Wicklungsradius w. In der Wickelstellung kann der Schlitten 51, welcher einen Wickelhaken 3 trägt, kann vorzugsweise in einem ersten Radialabstand r1 Bezug die Mittelachse M angeordnet sein. In der Entnahmestellung ist der Schlitten 51 in einem zweiten Radialabstand r2 in Bezug auf die Mittelachse M angeordnet, der größer ist als der erste Radialabstand r1.

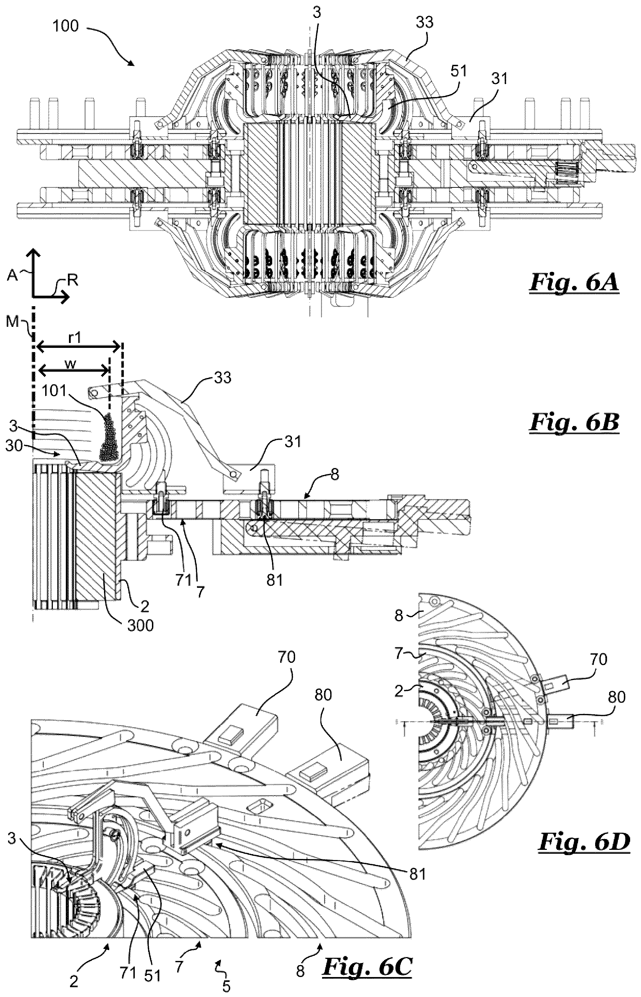

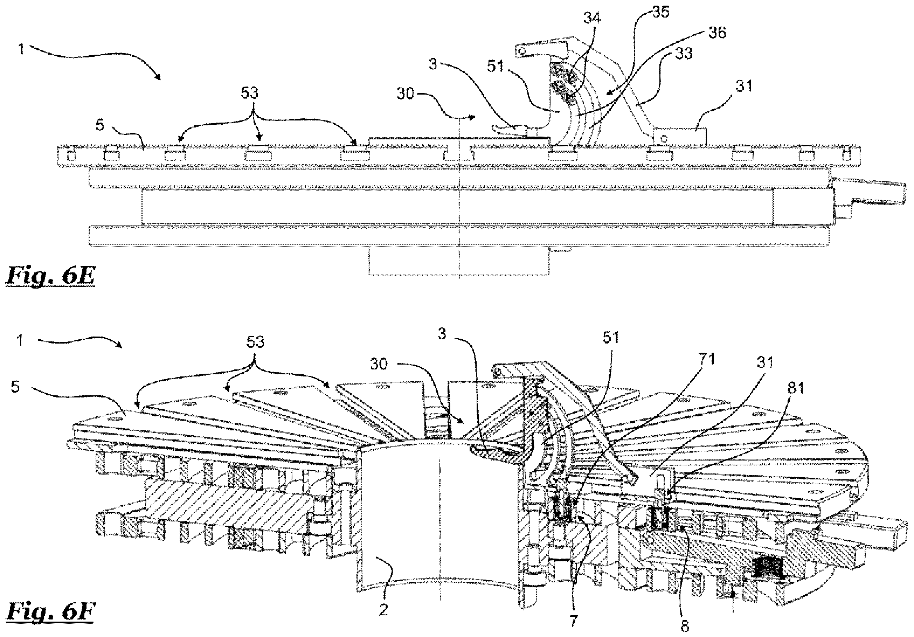

In den Figuren 6A bis 6F werden unterschiedliche Ansichten der Bewicklungsmaschine 100 in einer Freigabestellung dargestellt. In der Freigabestellung ist der Wickelhaken 3 relativ zu dem Draht 101 dergestalt verlagert, dass er in der Radialrichtung R relativ zu dem Draht 101 kollisionsfrei verlagerbar ist. Ausgehend von der Freigabestellung ist der Wickelhaken 3 aus dem radialen Bereich der Aufnahme 2 hinaus in die Entnahmestellung verlagerbar. Ausgehend von der Freigabestellung der Wickelhilfseinrichtung 1 kann der von dem Schlitten 51 getragene Wickelhaken 3 ungehindert durch den Draht 101 durch Verlagerung des Schlittens 51 in der Radialnut 53 aus dem Radialbereich der Aufnahme 2 hinaus oder in diesen hinein verschoben werden.

Wie in Figur 5B zu erkennen, kann der Wickelhaken 3 innenseitig ein gestuftes Profil aufweisen, sodass sich die Öffnung 30 in der Radialrichtung und in der Axialrichtung A von der Aufnahme 2 fort verjüngt. Der Wickelhaken 3 kann insbesondere dergestalt geformt sein, dass sich die Öffnung in der Axialrichtung von der Aufnahme 2 fort gestuft verjüngt. Auf diese Wese kann eine besonders enge Wicklung des Drahts 101 nahe den Zahnflanken 301, 302 erreicht werden. In der Wickelstellung kann der maximale Außenradius der Öffnung entsprechend dem Grund der Zahnlücke 302 definiert sein. Optional ist es möglich, die Wickelhaken derart aus zu führen, dass die Hakenkontur für das Einlegen der Wicklung der letzten Phase weiter zum Zentrum des Stators oder Rotors verlagert sind und/oder dass die Nuten der bereits gewickelten Teilspulen der Phasen U und V verdeckt werden.

Gegebenenfalls kann das Bewickeln eines innengenuteten Wicklungsträgers mit weiteren Drähten in noch freie Nuten und/oder Wickelhaken. insbesondere nach dem vorgesehenen Wickelschritt, durchgeführt werden, wobei beim Bewickeln mit dem letzten Draht oder Drahtbündel, die Wickelhaken an den Stirnseiten so angeordnet sein können, dass die Nuten nach dem Bewickeln mit dem letzten Draht oder Drahtbündel verdeckt sind. Auf diese Weise können Differenzen der elektrischen Widerstände einzelner Phasen verkleinert werden, was der Performance des Stators oder Rotors zu Gute kommt.

Bei der in den Figuren dargestellten bevorzugten Ausführungsform einer Bewicklungsmaschine 100 sind die Wickelhaken 3 an den Schlitten 51 schwenkbeweglich gelagert. Die Wickelhaken 3 sind schwenkbeweglich zwischen der Wickelstellung und der Freigabestellung an den Schlitten 51 gelagert. In der in Figur 5B dargestellten Wickelstellung ist der Wickelhaken 3 in der Axialrichtung A ausgerichtet und die Öffnung 30 des Wickelhaken 3 ebenfalls in der Axialrichtung A orientiert. In der in Figur 6B dargestellten Freigabestellung ist die Öffnung 30 sowohl in der Axialrichtung A als auch in der Radialrichtung R offen. Der Wickelhaken 3 ist in der Freigabestellung gemäß Figur 6B in der Radialrichtung nach innen orientiert. In Bezug auf die Axialrichtung A ist der Wickelhaken 3 in der Freigabestellung vollständig zwischen dem Draht 101 und der Aufnahme 2 mit dem darin angeordneten Stator oder Rotor mit innenliegenden Wickelzähnen 300 angeordnet. In der Axialrichtung A ist der Wickelhaken 3 in der Freigabestellung derart unterhalb des Drahts 3 angeordnet, dass der Wickelhaken 3 in radialer Richtung frei beweglich relativ zu dem in Axialrichtung A benachbart zum Wickelhaken 3 angeordneten Draht 101 ist.

Zur schwenkbaren Lagerung des Wickelhakens 3 am Schlitten 51 kann eine Gleitführung 35 vorgesehen sein. Bei der abgebildeten Ausführung hat der Schlitten 51 zwei bogenförmige, koaxiale Führungsöffnungen 36, in denen starr mit dem Wickelhaken 3 verbundene Führungsglieder 34 beweglich angeordnet sind. Die Führungsglieder 34 können gleitend oder rollend in einer jeweiligen Führungsöffnung 36 angeordnet sein. In Umfangsrichtung bezüglich der Mittelachse M können die Führungsglieder 34 spielfrei in einer jeweiligen Führungsöffnung 36 gelagert sein. Indem eine Führungsöffnung 36 und darin geführte Führungsglieder 34 zur schwenkbeweglichen Lagerung der Wickelhaken 3 an dem Schlitten 51 verwendet werden, ist der Wickelhaken 3 relativ zu dem Schlitten 51 um einen virtuellen Drehpunkt im Bereich der mit dem Draht belegbaren Öffnung 30 drehbeweglich.

Zum Verlagern eines Hakens 3 zwischen der in Radialrichtung R innenliegenden Wickelstellung beziehungsweise Freigabestellung und der in Radialrichtung R außen liegenden Entnahmestellung ist der Haken 3 an einem Schlitten 51 gehalten. Der Schlitten 51 ist in der Führung 5 beweglich. Der Schlitten 5 kann, wie in den Figuren abgebildet, beispielsweise eine T-Nuten- oder Kulissenführung oder eine Schwalbenschwanzführung aufweisen, der in einer Radialnut 53 linearbeweglich gelagert ist. Die Radialnut kann sich ausgehend von der Mittellinie M geradlinig in Radialrichtung R erstrecken. In der Axialrichtung A und in Umfangsrichtung bezüglich der Axialrichtung A ist der Schlitten 51 vorzugsweise starr in der Führung 5 gehalten.

Der Schlitten 51 ist mit einem ersten Mitnehmer 71 ausgestattet, der in einer ersten Kulisse 7 der Führung 5 geführt ist. Der Wickelhaken 3 ist mit einem Betätigungshebel 33 verbunden. Der Betätigungshebel 33 ist einerseits mit dem Wickelhaken 3 und andererseits mit einem Betätigungsschlitten 31 verbunden. Der Betätigungsschlitten 31 ist mit einem zweiten Mitnehmer 81 ausgestattet, der in einer zweiten Kulisse 8 der Führung 5 geführt ist. Der Betätigungsschlitten 31 ist in einer Radialnut 53 geführt. Zum Verschwenken des Wickelhakens 3 in die Freigabestellung kann der Betätigungshebel 33 von dem Betätigungshebel 31 gemäß einer push-to-open Kinematik radial nach innen bewegt werden.

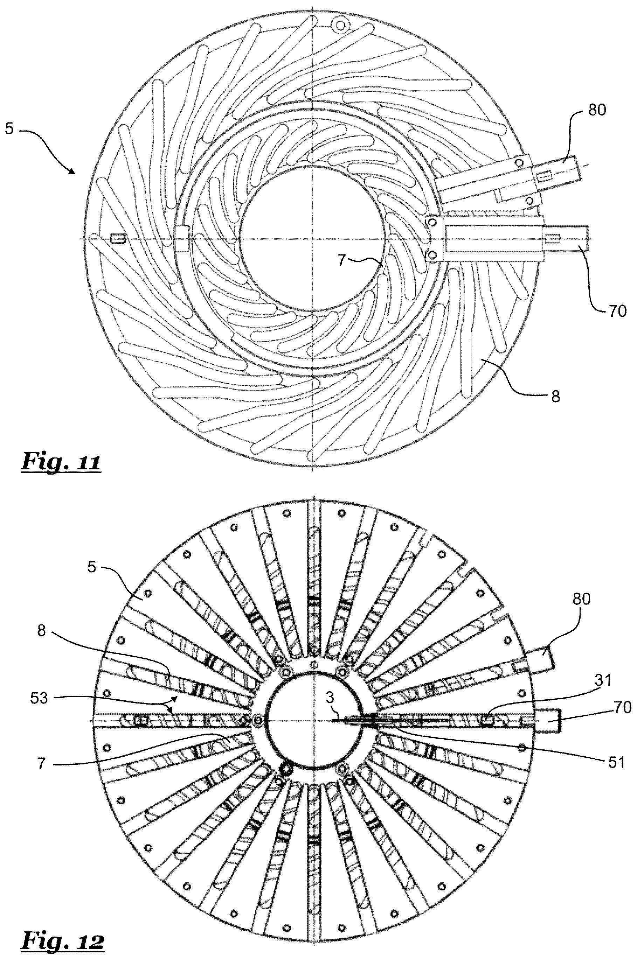

Die Kulissen 7, 8 sind in Detail in den Figuren 11 und 12 abgebildet. In Figur 12 sind auch die Radialnuten 53 in der Führung 5 oberhalb der Kulissen 7 und 8 dargestellt. Die demselben Wickelhaken 3 zugeordneten Schlitten 51 und Betätigungsschlitten 31 sind bei der bevorzugten Ausführungsform, die in den Figuren dargestellt ist, in derselben Radialnut 53 in der Radialrichtung R linearbeweglich geführt. Die erste Kulisse 7 ist in der Radialrichtung R vollumfänglich von der zweiten Kulisse 8 umgeben. Die Kulissen 7, 8 weisen nutenartige Führungen für die Mitnehmer 71 beziehungsweise 81 auf. Die Mitnehmer-Führungen der Kulissen 7 sind bogenförmig und erstrecken sich sowohl in Radialrichtung R als auch in Umfangsrichtung, sodass jede Mitnehmer-Führung ein radial innenliegendes Fußende und ein radial außenliegendes Kopfende aufweist, die relativ zueinander sowohl in der Radialrichtung als auch in Umfangsrichtung versetzt zu einander angeordnet sind. Bei der in Figur 11 abgebildeten Ausführung dehnen sich die Mitnehmer-Führungsnuten im Uhrzeigersinn geschwungen bogenförmig aus.

In Figur 12 sind die einander umgebenen ringförmigen Kulissen 7, 8 sowie die darüber in der Führung 5 angeordneten Radialnuten 53 dargestellt. Die erste, innere Kulisse 7 ist bezüglich der Mittelachse M drehfest mit einem Schlittenregister 70 verbunden. Die zweite, äußere Kulisse 8 ist bezüglich der Mittelachse M drehfest mit einem Betätigungsregister 80 verbunden.

Wenn die erste Kulisse 7 relativ zu den Radialnuten 32 um die Mittelachse M rotiert wird, wird dem ersten Mitnehmer 71, der sich von dem in der Radialnut 53 gelagerten Schlitten 51 in die erste Kulisse 7 hinein erstreckt, eine Radialbewegung aufgeprägt. Der starr an dem Schlitten 51 befestigt erste Mitnehmer 71 bewirkt, dass auch der Schlitten 51 eine durch die erste Kulisse 7 vorgegebene Radialstellung einnimmt.

Wenn die zweite Kulisse 8 relativ zu den Radialnuten 32 um die Mittelachse M rotiert wird, wird dem zweiten Mitnehmer 81, der sich von dem in der Radialnut 53 gelagerten Betätigungsschlitten 31 in die zweite Kulisse 8 hinein erstreckt, eine Radialbewegung aufgeprägt. Der starr an dem Betätigungsschlitten 31 befestigt zweite Mitnehmer 81 bewirkt, dass der Betätigungsschlitten 31 eine durch die zweite Kulisse 8 vorgegebene Radialstellung einnimmt.

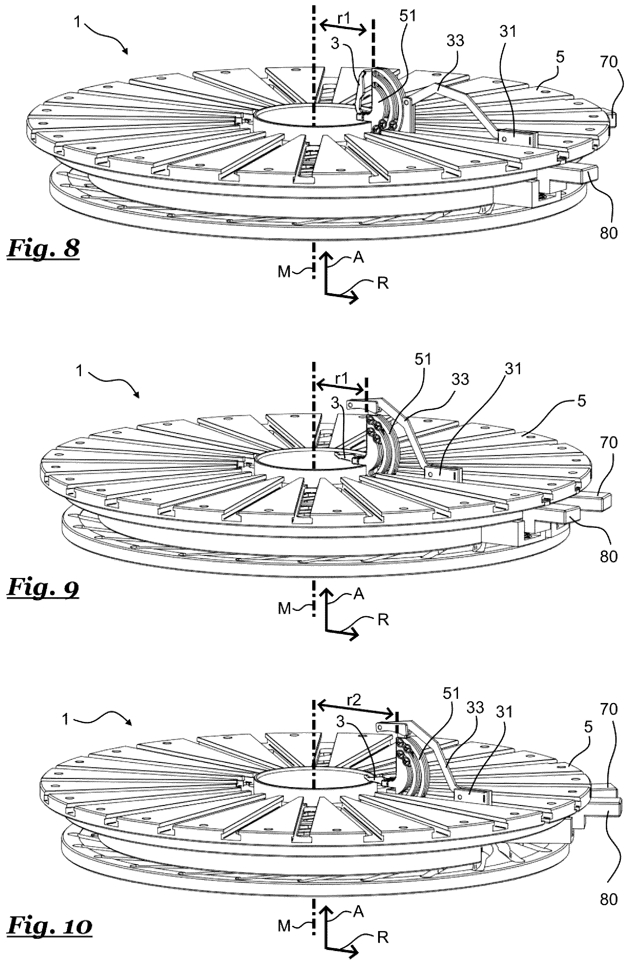

Indem sowohl die erste als auch die zweite Kulisse 7, 8 bewegt werden, können der Schlitten 51 und der Betätigungsschlitten 31 gemeinsam bewegt werden, etwa um den Wickelhaken 3 aus der Freigabestellung in die Entnahmestellung zu verlagern. Die Kulissen 7, 8 können in der abgebildeten bevorzugten Ausführungsform gemeinsam verlagert werden, indem die Register 70, 80 um die Mittelachse von der in Figur 6C und 6D und Figur 9 abgebildeten Stellung in die in Figur 7C und 7D und Figur 10 abgebildete Stellung gedreht werden. Indem sowohl der Schlitten 51 als auch der Betätigungsschlitten 31 in der Radialrichtung R verlagert werden, bleibt die Lage des Betätigungshebels 33 unverändert und somit auch die Orientierung des Wickelhakens 3. Zum Verfahren in die Entnahmestellung werden der Schlitten 51 und der Betätigungsschlitten 51 in der Radialrichtung R nach außen bewegt. Zum Verfahren von der Entnahmestellung in die Freigabestellung werden der Schlitten 51 und der Betätigungsschlitten 51 in der Radialrichtung R nach innen bewegt.

Um die Orientierung des Wickelhaken 3 zu verändern, beispielsweise um den Wickelhaken 3 aus der Wickelstellung die Freigabestellung zu schwenken, kann der Schlitten 51 radial ortsfest gehalten werden, während der Betätigungsschlitten 31 in der Radialrichtung R verfahren wird. Indem die radiale Lage des Betätigungsschlittens 31 relativ zur radialen Lage des Schlittens 51 verändert wird, ändert sich die Auslenkung des Betätigungshebels 33, sodass der Betätigungshebel 33 den Wickelhaken 3 verschwenkt. Der Betätigungshebel 33 kann verlagert werden, indem der Schlitten 51 radial ortsfest gehalten wird, während der Betätigungsschlitten 31 durch die zweite Kulisse 8 in der Radialrichtung R nach außen gedrängt wird. Wenn die zweite Kulisse 8 in der Umfangsrichtung relativ zu der ersten Kulisse 7 um die Mittelachse M gedreht wird, wird der an dem Betätigungsschlitten 31 befestigte zweite Mitnehmer 81 in der Radialrichtung R verlagert. Eine Verdrehung der zweiten Kulisse 8 relativ zu ersten Kulisse 7 kann erfolgen, indem das Betätigungsregister 80 relativ zu dem Schlittenregister 70 um die Mittelachse M gedreht wird. Beispielsweise sind die Register 70, 80 in der Wickelstellung gemäß der Figuren 5D und 8 weiter auseinandergespreizt als in der Freigabestellung gemäß der Figuren 6D und 9.

Maschinenseitig, insbesondere stationär an einem Gestell der Bewicklungsmaschine 100 (nicht im Detail dargestellt), kann ein Arretierungselement zum Betätigen eines oder beider Betätigungsregister 70/80 vorgesehen sein. Ein Arretierungselement kann zwischen einer aktiven Stellung zum Betätigen eines Betätigungsregisters 70 und/oder 80 und einer passiven Stellung verlagerbar sein, in der das oder die Betätigungsregister 70 und/oder 80 durch das Arretierungselement unbeeinflusst verbleibt. Beispielsweise kann das Arretierungelement in der Axialrichtung A und/oder Radialrichtung R zwischen der aktiven und der passiven Stellung verlagerbar sein. In der aktiven Stellung kann das Arretierungselement mit einem Betätigungsregister 70/80, insbesondere der Wickelhilfseinrichtung 1, in Kontakteingriff bringbar sein, um das Betätigungsregister 70/80 relativ zu der entsprechenden Kulisse 7/8 um die Mittelachse zu verlagern. Auf diese Weise können die Wickelhaken mithilfe einer Drehbewegung der Wickelhilfseinrichtung 1 in die Wickelstellung, die Entnahmestellung und/oder die Freigabestellung bewegt werden.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: Wickelhilfseinrichtung
- 2: Aufnahme
- 3: Wickelhaken
- 5: Führung
- 7: erste Kulisse
- 8: zweite Kulisse
- 30: Öffnung
- 31: Betätigungsschlitten
- 33: Betätigungshebel
- 34: Führungsglied
- 35: Gleitführung
- 36: Führungsöffnung
- 51: Schlitten
- 53: Radialnut
- 70: Schlittenregister
- 71: erster Mitnehmer
- 80: Betätigungsregister
- 81: zweiter Mitnehmer
- 100: Bewicklungsmaschine
- 101: Draht
- 200: Nadelwickelvorrichtung
- 300: Wickelzähne / Wicklungszähne
- 301: rechte Zahnflanke
- 302: Zahnlücke
- 303: linke Zahnflanke

- r1: erster Radialabstand
- r2: zweiter Radialabstand
- w: Wicklungsradius

- A: Axialrichtung
- M: Mittelachse
- R: Radialrichtung

## Patentansprüche

1. Wickelhilfseinrichtung (1) zur Bewicklung der Wickelzähne (300) eines Rotors oder Stators einer Elektromaschine, umfassend
- eine Aufnahme (2) für einen Stator oder Rotor mit innenliegenden Wickelzähnen (300),
- eine Führung (5), die an der Aufnahme (2) befestigt ist,
- mehrere Schlitten (51), die an der Führung (5) radialbeweglich gelagert sind,
- mehrere an den Schlitten (51) gehaltene Wickelhaken (3),
wobei die Wickelhaken (3) mit den Schlitten (51) zwischen einer radial inneren Wickelstellung und einer radial äußeren Entnahmestellung beweglich sind.

2. Wickelhilfseinrichtung (1) nach Anspruch 1, wobei die Führung (5) Radialnuten (53) umfasst, in der die Schlitten (51) geführt sind.

3. Wickelhilfseinrichtung (1) nach Anspruch 1 oder 2, wobei die Schlitten (51) erste Mitnehmer (71) aufweisen, die in einer ersten Kulisse (7) aufgenommen sind, wobei die ersten Mitnehmer (71) und die erste Kulisse (7) derart aufeinander abgestimmt sind, dass eine rotatorische Bewegung der ersten Kulisse (7) den ersten Mitnehmern (71) eine radiale Bewegung aufprägt, sodass die Schlitten (51) in Abhängigkeit von einer Relativstellung der Führung (5) zur ersten Kulisse (7) eine vorbestimmte Radialstellung einnehmen.

4. Wickelhilfseinrichtung (1) nach mindestens einem der vorstehenden Ansprüche, wobei die Wickelhaken (3) zwischen der Wickelstellung und einer Freigabestellung beweglich, insbesondere schwenkbeweglich, vorzugsweise an dem Schlitten (51) gelagert, sind, wobei insbesondere in der Freigabestellung die Wickelhaken (3) und/oder Öffnungen (30) der Wickelhaken (3) in radialer Richtung nach innen ausgerichtet sind.

5. Wickelhilfseinrichtung (1) nach Anspruch 4, ferner aufweisend wenigstens eine Betätigungsvorrichtung, die dazu ausgelegt und eingerichtet ist, die Wickelhaken (3) zwischen der Wickelstellung und der Freigabestellung zu verbringen.

6. Wickelhilfseinrichtung (1) nach Anspruch 5, wobei die Betätigungsvorrichtung mit den Wickelhaken (3) gekoppelte Betätigungsschlitten (31) aufweist, die beweglich an der Führung (5) gelagert sind.

7. Wickelhilfseinrichtung (1) nach Anspruch 6, wobei die Betätigungsschlitten (31) zweite Mitnehmer (81) aufweisen, die in einer zweiten Kulisse (8) aufgenommen sind, wobei die zweiten Mitnehmer (81) und die zweite Kulisse (8) derart aufeinander abgestimmt sind, dass eine rotatorische Bewegung der zweiten Kulisse (8) den zweiten Mitnehmern (81) eine radiale Bewegung aufprägt, sodass die Betätigungsschlitten (31) in Abhängigkeit von einer Relativstellung der Führung (5) zur zweiten Kulisse (8) eine vorbestimmte Radialstellung einnehmen.

8. Wickelhilfseinrichtung (1) nach Anspruch 7, wobei die erste Kulisse (7) und die zweite Kulisse (8) radial zu einander versetzt, insbesondere in derselben Ebene, angeordnet sind.

9. Wickelhilfseinrichtung (1) nach Anspruch 7 oder 8, wobei die Wickelhaken (3) durch eine rotatorische Relativbewegung der ersten Kulisse (7) bezüglich der zweiten Kulisse (8) zwischen der Wickelstellung und einer Freigabestellung beweglich sind, in der die Öffnungen (30) der Wickelhaken (3) in radialer Richtung nach innen ausgerichtet sind.

10. Wickelhilfseinrichtung (1) nach einem der vorstehenden Ansprüche, wobei die Wickelhaken (3) durch eine gemeinsame Bewegung der Führung (5), insbesondere mittels der ersten Kulisse (7), und der Betätigungsvorrichtung, insbesondere mittels der zweiten Kulisse (8), zwischen der Freigabestellung und der Entnahmestellung beweglich ist.

11. Bewicklungsmaschine (100) zur Bewicklung der Wickelzähne (300) eines Rotors oder Stators einer Elektromaschine, aufweisend wenigstens eine Wickelhilfseinrichtungen (1) nach mindestens einem der vorstehenden Ansprüche und wenigstens eine Wickelvorrichtung, vorzugsweise Nadelwickelvorrichtung (200), die durch die Aufnahme (2) beweglich ist, um zur Bewicklung der Wickelzähne (300) eines Rotors oder Stators einer Elektromaschine einen Draht (101) um die Wickelhaken (3) zu führen.

12. Verfahren zur Bewicklung von Wickelzähnen (300) eines Rotors oder Stators einer Elektromaschine aufweisend folgende Schritte:
- Bereitstellen einer Aufnahme (2) für einen Stator oder Rotor mit innenliegenden Wickelzähnen (300),
- Einsetzen des Stators oder Rotors mit den Wickelzähnen (300) in die Aufnahme (2),
- Bereitstellen von Wickelhaken (3), die an der Aufnahme (2) mit einer Führung (5) beweglich gelagert sind, wobei eine ersten Gruppe Wickelhaken (3) in einer radial inneren Wickelstellung an einem ersten axialen Ende der Aufnahme (2), und eine zweite Gruppe Wickelhaken (3) in einer radial inneren Wickelstellung an einem zweiten axialen Ende der Aufnahme (2) bereitgestellt wird,
- Bereitstellen einer Wickelvorrichtung;
- Führen eines Drahts (101) um die erste und um die zweite Gruppe Wickelhaken (3), um die in der Aufnahme (2) gehaltenen Wickelzähne (300) des Rotors oder Stators zu bewickeln;
- Bewegen der ersten und der zweiten Gruppe Wickelhaken (3) mittels der Führung (5) in eine radial äußere Entnahmestellung an der Aufnahme (2); und
- Entnehmen des bewickelten Stators oder Rotors mit innenliegenden Wickelzähnen (300) aus der Aufnahme (2).

13. Verfahren nach Anspruch 12, wobei die die Wickelhaken (3) von der Wickelstellung in eine Freigabestellung verbracht werden, bevor sie in die Entnahmestellung bewegt werden.
